# EUROPÄISCHE PATENTSCHRIFT

(11) **EP 0 654 384 B1**
(45) Veröffentlichungstag und Bekanntmachung des Hinweises auf die Patenterteilung: **11.06.1997**
(21) Anmeldenummer: 94116100.2
(22) Anmeldetag: 12.10.1994
(51) Int. Cl.: B60S 5/04

(54) **Pumpstation für Reifen**
Pump station for tyres
Station de pompage pour pneus

(30) Priorität: 19.11.1993 DE 9317724 U
(43) Veröffentlichungstag der Anmeldung: 24.05.1995
(73) Patentinhaber: WEILNHAMMER MASCHINENBAU GMBH, D-84405 Dorfen (DE)
(72) Erfinder: Müller, Josef, D-84427 St. Wolfgang (DE)
(74) Vertreter: Schieschke, Klaus, Dipl.-Ing.

(56) Entgegenhaltungen:
- DE-A- 2 923 868
- DE-A- 3 042 728
- US-A- 5 168 911

## Beschreibung

Die Erfindung bezieht sich auf eine Pumpstation für Reifen, mit einem Gestell zur Lagerung mindestens eines Reifens und mit einer Füllvorrichtung, welche über Leitungen mit mindestens einer Pneumatikquelle und mit einer elektrischen Steuereinheit verbunden ist.

Als allgemeiner Stand der Technik ist bereits eine derartige Pumpstation bekannt, welche so gestaltet ist, daß ein Reifen liegend auf einem Gestell angeordnet wird, welches mit Rollen versehen ist. Über diese Rollen gelangt der Reifen in den Bereich der Füllvorrichtung, wo die entsprechende pneumatische Leitung angeschlossen wird.

Dokument US-A-5 168 911 zeigt ein derartiges, dem Oberbegriff des Anspruchs 1 entsprechendes Vorrichtung.

Diese bekannte Pumpstation ist daher aufwendig in der Handhabung und steht einer weiteren Automatisierung bezüglich ihres konstruktiven Aufbaus hindernd entgegen.

Dementsprechend liegt die Aufgabe der vorliegenden Erfindung darin, eine Pumpstation für Reifen der eingangs genannten Art zu schaffen, welche bei einfachem Aufbau kostensparend zu bedienen ist und außerdem in einen Automatisierungsprozess integriert werden kann.

Diese Aufgabe wird erfindungsgemäß dadurch gelöst, daß das Gestell als um eine senkrechte Mittelachse drehbares Vieleckgehäuse ausgebildet ist und daß Reifen stehend an den Seitenflächen des Vieleckgehäuses lagerbar sind, wobei mindestens ein an einer Seitenfläche des Vieleckgehäuses gelagerter Reifen mit der Füllvorrichtung verbindbar ist. Hierdurch ergibt sich der Vorteil, daß an jeder Seitenfläche des Vieleckgehäuses Reifen gelagert werden können, welche vor oder nach dem Füllvorgang bereits vorliegen, so daß die gesamte Einheit in einen Automatisierungsprozeß integriert werden kann und der jeweilige, der Füllvorrichtung vorliegende Reifen schnell und kostensparend aufzupumpen ist.

Das Vieleckgehäuse kann beispielsweise als Pyramidenstumpf ausgebildet sein und vier, fünf oder sechs Seitenflächen aufweisen. Weiterhin kann der Pyramidenstumpf von einer in der senkrechten Mittelachse angeordneten Zentralachse durchsetzt sein, welche eine in der senkrechten Mittelachse stehende Welle umgibt, wobei die Zentralachse und die Welle über den unteren Bereich des Pyramidenstumpfs hinausragen und die Welle an einem ortsfesten Rahmen befestigt ist. Es ergibt sich damit eine sehr stabile Einheit, wobei trotzdem das mit Reifen bestückte Vieleckgehäuse um die senkrechte Achse gedreht werden kann.

Um bei Vorliegen der betreffenden Seitenfläche des Vieleckgehäuses zu arretieren, kann an der drehbaren Zentralachse im Bereich des Rahmens eine Arretierscheibe angeordnet sein, welche mit einem am Rahmen befestigten, federnd beaufschlagten Arretierzapfen zusammenwirkt. Dieser Arretierzapfen ist mechanisch, hydraulisch, pneumatisch oder elektrisch betätigbar.

Nach einem anderen Merkmal der Erfindung können sich die elektrischen und pneumatischen Leitungen von der Füllstation durch die Welle nach unten erstrecken und aus dem Rahmen austreten, so daß keinerlei störenden Leitungen im Bereich der Reifen oder der Füllstation vorliegen.

Es besteht erfindungsgemäß darüber hinaus die Möglichkeit, daß die Drehbewegung des Vieleckgehäuses um die senkrechte Mittelachse mechanisch, pneumatisch, hydraulisch oder elektrisch steuerbar ist. Hierbei können beispielsweise Kettenräder, Zahnriemen, Kolbenzylindereinheiten mit Hebelgestängen oder Motoren vorgesehen sein.

Um eine Bedienperson vor Unfällen zu schützen, besteht die darüber hinaus die Möglichkeit, daß an mindestens einer Seitenfläche des Vieleckgehäuses zum Umgeben des Reifens ein Käfig anordenbar ist. Dieser Käfig kann heb-, senk- oder schwenkbar mit der ortsfesten Welle verbunden sein. Damit wird während der Füllvorganges der Reifen von dem Käfig umgeben, so daß die Unfallgefahr weitgehend vermindert wird.

Vorteilhafte Weiterbildungen ergeben sich aus den Unteransprüchen.

Die Erfindung wird nachfolgend anhand von in der Zeichnung dargestellten Ausführungsbeispielen näher beschrieben. In der Zeichnung zeigen:
- Fig. 1: eine schematische Seitenansicht der erfindungsgemäßen Pumpstation in einer ersten Ausführungsform:
- Fig. 2: eine vergrößerte Ansicht im Bereich II nach Fig. 1;
- Fig. 3: eine vergrößerte Ansicht im Bereich III nach Fig. 1;
- Fig. 4, 5 und 6: zwei weitere Ausführungsmöglichkeiten der Erfindung in perspektivischer Seitenansicht.

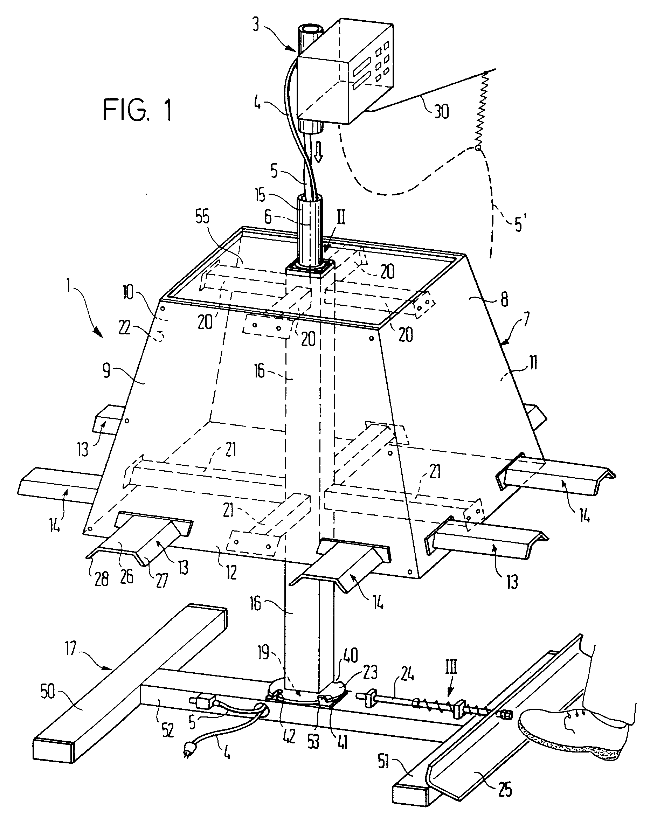

In Fig. 1 ist in perspektivischer Ansicht die erfindungsgemäße Pumpstation in einer ersten Ausführungsform dargestellt. Wie ersichtlich, ist ein Gestell 1 vorgesehen, welches als Vieleckgehäuse 7 ausgebildet ist. Dieses Vieleckgehäuse 7 besitzt die Form eines Pyramidenstumps mit vier Seitenflächen 8, 9, 10, 11.

Durch diesen Pyramidenstumpf, d.h. das Vieleckgehäuse 7, erstreckt sich eine Zentralachse 16, welche beispielsweise aus Rechteckrohr besteht. Über obere Verstrebungen 20 bzw. untere Verstrebungen 21, welche von der Zentralachse 16 bis zur jeweiligen Innenwandung 22 der Seitenflächen 8, 9, 10, 11 reichen, ist die Zentralachse 16 mit den vorgenannten Seitenflächen verbunden.

Durch die Zentralachse 16 ragt eine Welle 15, welche eine senkrechte Mittelachse 6 bildet. Die Welle 15 und die Zentralachse 16 reichen über den unteren Bereich des Vieleckgehäuses 7 hinaus, wobei die Welle 15 an einer Halteplatte 53 befestigt ist, die ihrerseits Teil eines ortsfesten Rahmens 17 ist.

Dieser ortsfeste Rahmen 17 besteht aus zwei Querstreben 50 und 51 sowie einer Längsstrebe 52, an welcher die Halteplatte 53 befestigt ist.

Oberhalb des pyramidenstumpfartig ausgebildeten Vieleckgehäuses 7 befindet sich eine Füllvorrichtung 3, welche z.B. über eine Platte an der Welle 15 befestigt ist. Eine elektrische Leitung 4 sowie eine pneumatische Leitung 5 erstrecken sich von dem Rahmen 17, d.h. dem unteren Bereich durch die Welle 15 nach oben bis zur Füllstation 3. Diese Füllstation 3 weist einen Schwenkarm 30 auf, an welchem federnd ein pneumatisches Leitungsteil 5' hängt.

Die vier Seitenflächen 8, 9, 10, 11 besitzen jeweils im unteren Bereich Auflageelemente 13, 14, welche im Abstand voneinander liegen. Diese Auflageelemente sind jeweils als Winkelprofil ausgebildet mit einer Oberseite 26 und zwei winklig dazu angeordneten Seitenflächen 27 und 28.

Infolge der vorgenannten konstruktiven Gestaltung kann nun jede der vier Seitenflächen 8, 9, 10, 11 mit einem Reifen bestückt werden, welche jeweils auf den Auflageelementen 13 und 14 stehend aufruhen und an die jeweiligen Seitenflächen angelehnt sind. Im Bereich der Seitenfläche 8 kann nun der Schlauch des zu füllenden Reifens mit dem pneumatischen Leitungsteil 5' verbunden werden. Danach wird die Füllstation 3 betätigt, so daß entsprechende Luftmenge in den Schlauch des an der Seitenfläche 8 anliegenden Reifens eingegeben wird.

Nach Beendigung des Füllvorganges und Entfernen des pneumatischen Leitungsteils 5' mit Hilfe des Schwenkarms 30 und der Federaufhängung aus dem Bereich des betreffenden Reifens kann nun das Vieleckgehäuse 7 beispielsweise im Uhrzeigersinn um 90° bzw. 72° oder 60° gedreht werden, so daß der an der Seitenfläche 11 anliegende nächste Reifen gefüllt werden kann (Die Winkeldrehung hängt hierbei von der Anzahl der Seitenflächen ab).

Um die Drehung exakt um 90° bzw. 72° oder 60° zu gewährleisten, ist die Zentralachse 16 im unteren Bereich mit einer Arretierscheibe 23 verbunden, welche vier bzw. fünf oder sechs Ausnehmungen besitzt, von welchen nur drei zu sehen sind, nämlich 40, 41 und 42.

Diese Arretierscheibe 23 mit den vier bzw. fünf oder sechs Ausnehmungen arbeitet mit einem Arretierzapfen 24 zusammen, welcher horizontal auf der Längsstrebe 52 angeordnet ist.

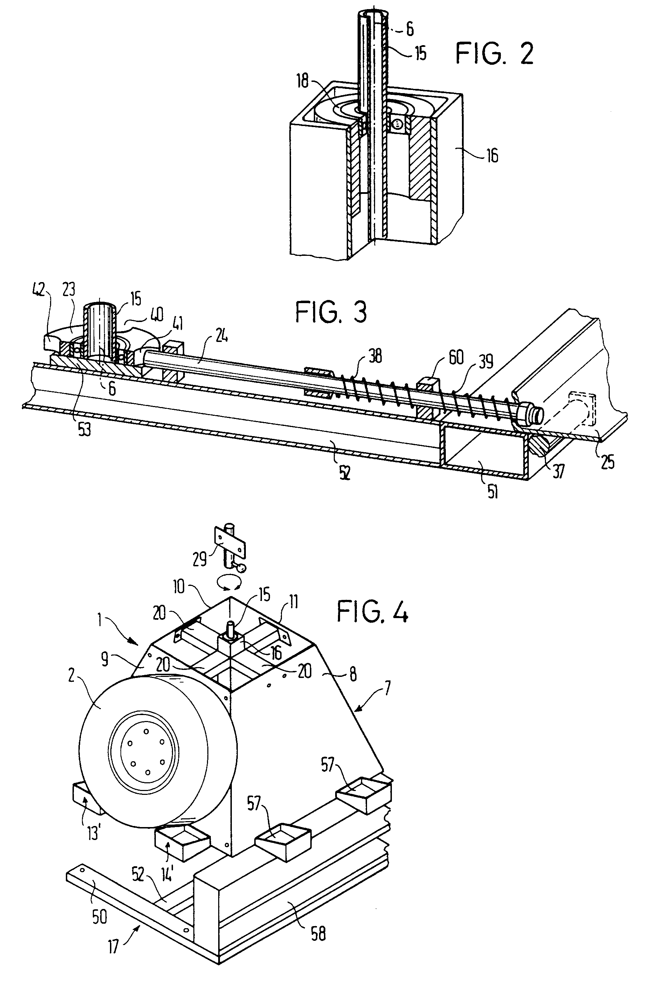

Aus Fig. 3 geht hervor, daß dieser Arretierzapfen 24 von zwei Federn 38, 39 beaufschlagt wird und rückseitig mit einer Tretschiene 25 verbunden ist. Diese Tretschiene 25 ist über einen Zapfen 37 endseitig jeweils mit einer entsprechenden Lagerstelle in der Längsstrebe 51 drehbar gelagert.

Wird nun gemäß Fig. 1 auf die Tretschiene 25 eingewirkt, so entfernt sich der Arretierzapfen 24 aus der jeweiligen Arretierung der Arretierscheibe 23 gegen Wirkung der Feder 38, welche gegen die Lagerstelle 60 gespannt wird.

Nunmehr kann der Pyramidenstumpf, d.h. das Vieleckgehäuse 7 um 90° bzw. 72° bei Fünfeck und 60° bei Sechseck gedreht werden, wonach unter Wirkung der Feder 38 der Arretierzapfen 24 in die nächste Arretierung der Arretierscheibe 23 eingreift. Die Feder 39 dient zum Ausgleich des Spieles im Fußpedal. Um diese Drehbewegung zu erleichtern, befinden sich im oberen und unteren Bereich zwischen der senkrechten Welle 15 und der Zentralachse 16 Lagerstellen. Fig. 2 zeigt eine derartige Lagerstelle, in welcher beispielsweise ein Kugellager 18 angeordnet ist.

Zum Drehen des Vieleckgehäuses können in nicht näher dargestellter Ausführungsform im Bereich des Rahmens 17 beispielsweise Kettenräder, Zahnriemen, Kolbenzylindereinheiten mit Hebelgestängen oder Motoren vorgesehen sein. Hierbei können beispielsweise Gleichstrommotoren oder Wechselstrommotoren mit Bremsen Anwendung finden. Es ist auch die Anwendung eines Luftmotors denkbar.

Während bei der Ausführungsform nach Fig. 1 die Tretschiene 25 fußbetätigt ist, besteht in nicht näher dargestellter Ausführungsform auch die Möglichkeit, diese Tretschiene mechanisch, hydraulisch oder pneumatisch zu betätigen.

Der Pyramidenstumpf, d.h. das Vieleckgehäuse 7, ist im oberen Bereich durch eine zurückgesetzte Platte 55 abgedeckt, so daß mögliche Unfallgefahr infolge der Streben 20 beim Drehen des Vieleckgehäuses 7 vermieden wird. Diese Platte 55 kann gleichzeitig zur Ablage von Werkzeugen, Schrauben, Muttern oder anderen Maschinenteilen dienen.

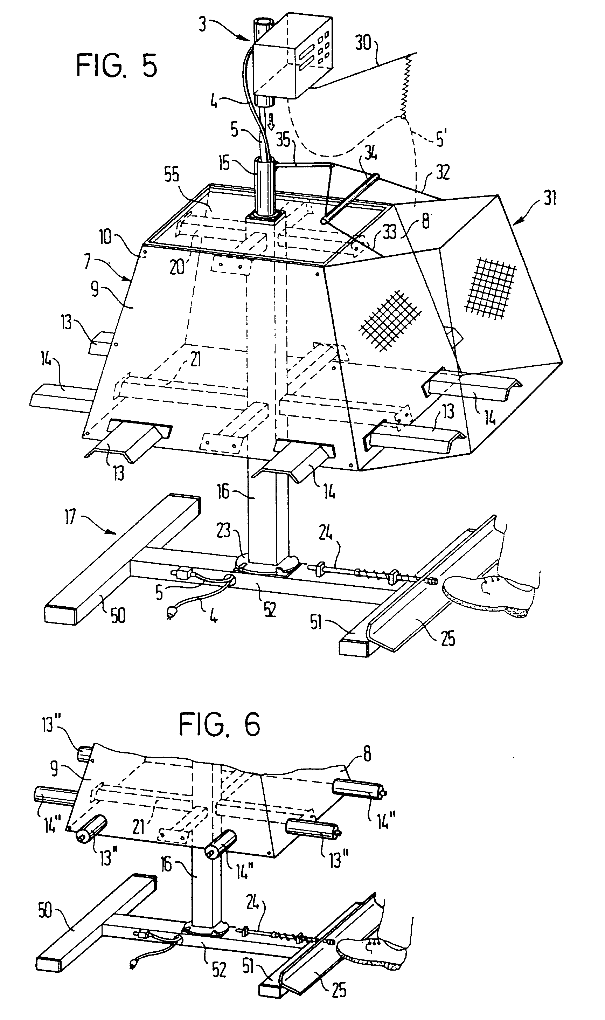

Bei der Ausführungsform nach Fig. 4 ist ersichtlich, wie ein Reifen 2 an der Seitenfläche 9 des Vieleckgehäuses 7 anlehnt und auf Auflagelementen 13' und 14' aufruht, welche als Kästen 57 ausgebildet sind. Diese Kästen 57 können beispielsweise zur Aufnahme von Werkzeugen, Schrauben, Muttern oder anderen Maschinenelementen dienen. Die Auflageelemente können nach Fig. 6 auch als Rollen 13'', 14'' ausgebildet sein. Weiterhin sind die beiden Seitenstreben durch ein Kastenteil 58 miteinander verbunden. Dieses Kastenteil 58 ragt bis in den unteren Bereich des Vieleckgehäuses 7, welches sich analog der Ausführungsform nach Fig. 1 mit seiner Zentralachse 16 um die Welle 15 drehen kann. Weiterhin ist im oberen Bereich der Welle eine Lagerplatte 29 vorgesehen, an der die Füllstation 3 analog der Ausführungsform nach Fig. 1 befestigt werden kann.

Fig. 5 zeigt eine weitere Ausführungsmöglichkeit der Erfindung: Diese ist im wesentlichen ähnlich der Ausführungsform nach Fig. 1, wobei jedoch im Bereich der Seitenfläche 8 ein Käfig 31 vorgesehen ist, dessen vordere, oberen und seitlichen Seitenflächen von einem Gitter umgeben sind. Dieser Käfig 31 umschließt einen auf den Auflageelementen 13 und 14 aufruhenden und an der Seitenfläche 8 angelehnten Reifen.

Der Käfig 31 ist beispielsweise über Arme 32 und 33 mit einer Drehachse 34 verbunden, welche über einen Haltearm 35 an der ortsfesten Welle 15 befestigt ist. Damit besteht die Möglichkeit, den Käfig 31 in Pfeilrichtung um die Drehachse 34 nach oben zu schwenken, so daß das Vieleckgehäuse 7 um 90° gedreht werden kann und damit nach Einschwenken des Käfigs 31 der nächste Reifen während des Befüllvorganges von dem Käfig 31 umschlossen ist. Hierdurch ergibt sich eine erhebliche Minderung einer möglichen Unfallgefahr.

Während in der Ausführungsform nach Fig. 5 die Schwenkmöglichkeit des Käfigs 31 um die Drehachse 34 dargestellt ist, ist es auch denkbar, den Käfig 31 heb- und senkbar mit der ortsfesten Welle 15 zu verbinden, wobei in jedem Fall jedoch gewährleistet sein soll, daß die Drehung des Vieleckgehäuses 7 um die Welle 15 keine Behinderung erfährt.

Insgesamt ergibt sich damit eine Pumpstation für Reifen, welche eine erhebliche Verbesserung des Arbeitsablaufes bedeutet und in einen Automatisierungsprozeß integriert werden kann.

## Patentansprüche

1. Pumpstation für Reifen, mit einem Gestell zur Lagerung mindestens eines Reifens und mit einer Füllvorrichtung, welche über Leitungen mit mindestens einer Pneumatikquelle und mit einer elektrischen Steuereinheit verbunden ist,
dadurch gekennzeichnet,
daß das Gestell (1) als um eine senkrechte Mittelachse (6) drehbares Vieleckgehäuse (7) ausgebildet ist und
daß Reifen stehend an den Seitenflächen (8, 9, 10, 11) des Vieleckgehäuses (7) lagerbar sind, wobei mindestens ein an einer Seitenfläche (8) des Vieleckgehäuses (7) gelagerter Reifen (2) mit der Füllvorrichtung (3) verbindbar ist.

2. Pumpstation nach Anspruch 1,
dadurch gekennzeichnet,
daß das Vieleckgehäuse (7) als Pyramidenstumpf ausgebildet ist, wobei im unteren Bereich (12) des Pyramidenstumpfs jeweils mindestens ein Auflageelement (13, 14) für einen Reifen vorgesehen ist.

3. Pumpstation nach Anspruch 2,
dadurch gekennzeichnet,
daß der Pyramidenstumpf von einer in der senkrechten Mittelachse (6) angeordneten Zentralachse (16) durchsetzt ist, welche eine in der senkrechten Mittelachse stehende Welle (15) umgibt und daß die Zentralachse (16) und die Welle (15) über den unteren Bereich des Pyramidenstumpfes hinausragen, wobei die Welle (15) an einem ortsfesten Rahmen (17) befestigt ist.

4. Pumpstation nach Anspruch 3,
dadurch gekennzeichnet,
daß zwischen der Welle (15) und der Zentralachse (16) mindestens zwei Lager (18, 19) angeordnet sind.

5. Pumpstation nach einem der vorhergehenden Ansprüche,
dadurch gekennzeichnet,
daß die Zentralachse (16) als Rechteckrohr ausgebildet und im oberen und unteren Bereich über Streben (20, 21) mit der jeweiligen Innenwandung (22) des pyramidenstumpfartig ausgebildeten Vieleckgehäuses (7) verbunden ist.

6. Pumpstation nach einem der vorhergehenden Ansprüche,
dadurch gekennzeichnet,
daß jeder Seitenfläche (8, 9, 10, 11) des Pyramidenstumpfs eine Arretierung zugeordnet ist.

7. Pumpstation nach einem der vorhergehenden Ansprüche,
dadurch gekennzeichnet,
daß der Pyramidenstumpf vier Seitenflächen (8, 9, 10, 11) aufweist.

8. Pumpstation nach Anspruch 6,
dadurch gekennzeichnet,
daß an der drehbaren Zentralachse (16) im Bereich des Rahmens (17) eine Arretierscheibe (23) angeordnet ist, welche mit einem am Rahmen (17) befestigten federnd beaufschlagten Arretierzapfen (24) zusammenwirkt.

9. Pumpstation nach Anspruch 8,
dadurch gekennzeichnet,
daß der Arretierzapfen (24) horizontal verläuft und mechanisch, hydraulisch, pneumatisch oder elektrisch betätigbar ist.

10. Pumpstation nach Anspruch 9,
dadurch gekennzeichnet,
daß der Arretierzapfen (24) mit einer schwenkbaren, am Rahmen (17) drehbar befestigten Tretschiene (25) verbunden ist.

11. Pumpstation nach einem der vorhergehenden Ansprüche,
dadurch gekennzeichnet,
daß sich die Leitungen (4, 5) von der Füllstation (3) durch die Welle (15) nach unten erstrecken und aus dem Rahmen (17) austreten.

12. Pumpstation nach einem der vorhergehenden Ansprüche,
dadurch gekennzeichnet,
daß die Drehbewegung des Vieleckgehäuses (7) um die senkrechte Mittelachse (6) mechanisch, pneumatisch, hydraulisch oder elektrisch steuerbar ist.

13. Pumpstation nach Anspruch 12,
dadurch gekennzeichnet,
daß zum Drehen des Vieleckgehäuses (7) im Bereich des Rahmens (17) Kettenräder, Zahnriemen, Kolbenzylindereinheiten mit Hebelgestängen oder Motoren angeordnet sind.

14. Pumpstation nach Anspruch 2,
dadurch gekennzeichnet,
daß zwei im Abstand voneinander liegende Auflageelemente (13, 14) an jeder Seitenfläche (8, 9, 10, 11) des Vieleckgehäuses (7) angeordnet sind.

15. Pumpstation nach Anspruch 14,
dadurch gekennzeichnet,
daß die Auflageelemente (13, 14) jeweils als Winkelprofil ausgebildet sind mit einer Oberseite (26) und zwei winklig dazu angeordneten Seitenflächen (27, 28).

16. Pumpstation nach Anspruch 14,
dadurch gekennzeichnet,
daß die Auflageelemente (13, 14) als Kästen (13', 14') bzw. als Rollen (13'', 14'') ausgebildet sind.

17. Pumpstation nach einem der vorhergehenden Ansprüche,
dadurch gekennzeichnet,
daß das obere Ende der Welle (15) mit einer Lagerplatte (29) zur Befestigung der Füllstation (3) verbunden ist.

18. Pumpstation nach einem der vorhergehenden Ansprüche,
dadurch gekennzeichnet,
daß im Bereich der Füllstation (3) ein Schwenkarm (30) zur federnden Halterung eines mit dem Reifen (2) verbindbaren pneumatischen Leitungsteils (5') vorgesehen ist.

19. Pumpstation nach einem der vorhergehenden Ansprüche,
dadurch gekennzeichnet,
daß an mindestens einer Seitenfläche (8, 9, 10, 11) des Vieleckgehäuses (7) zum Umgeben des Reifens (2) ein Käfig (31) anordenbar ist.

20. Pumpstation nach Anspruch 19,
dadurch gekennzeichnet,
daß der Käfig (31) heb-, senk-, oder schwenkbar mit der ortsfesten Welle (15) verbunden ist.

21. Pumpstation nach einem der vorhergehenden Ansprüche,
dadurch gekennzeichnet,
daß der Rahmen (17) aus zwei Querstreben (50, 51) und einer Längsstrebe (52) aus Profilstahl mit rechteckigem Querschnitt hergestellt ist.

22. Pumpstation nach Anspruch 21,
dadurch gekennzeichnet,
daß die senkrechte Welle (15) über eine Halteplatte (53) an der Längsstrebe (52) des Rahmens (17) befestigt ist.

23. Pumpstation nach einem der vorhergehenden Ansprüche,
dadurch gekennzeichnet,
daß die obere Ebene des pyramidenstumpfartigen Vieleckgehäuses (7) durch eine zurückgesetzte Platte verschlossen ist.

## Claims

1. Pump station for tyres having a frame for carrying at least one tyre and having an inflating apparatus which is connected by way of connections with at least one compressed air source and with an electrical control unit, characterised in that
the frame (1) is constructed as a polygonal housing (7)
rotatable about a vertical centre line (6) and
tyres can be carried standing next to the side surfaces (8, 9, 10, 11) of the polygonal housing (7), and at least one of the tyres (2) carried next to a side surface (8) of the polygonal housing (7) can be connected to the inflating apparatus (3).

2. Pump station according to claim 1, characterised in that the polygonal housing (7) is constructed as a truncated pyramid, at least one support element (13, 14) for a tyre being respectively provided in the lower region (12) of the truncated pyramid.

3. Pump station according to claim 2, characterised in that the truncated pyramid is traversed by a central axle (16) arranged on the vertical centre line (6) and surrounding a shaft (15) standing on the vertical centre line, and that the central axle (16) and the shaft (15) project beyond the lower region of the truncated pyramid, the shaft (15) being secured to a stationary frame (17).

4. Pump station according to claim 3, characterised in that at least two bearings (18, 19) are arranged between the shaft (15) and the central axle (16).

5. Pump station according to one of the preceding claims, characterised in that the central axle (16) is constructed as a square tube and is connected in the upper and lower regions by way of struts (20, 21) with the respective inner walls (22) of the polygonal housing (7) constructed like a truncated pyramid.

6. Pump station according to one of the preceding claims, characterised in that each side surface (8, 9, 10, 11) of the truncated pyramid has a locking means associated with it.

7. Pump station according to one of the preceding claims, characterised in that the truncated pyramid has four side surfaces (8, 9, 10, 11).

8. Pump station according to claim 6, characterised in that a locking disc (23) is arranged on the rotatable central axle (16) in the region of the frame (17) and which cooperates with a spring loaded locking pin (24) secured to the frame (17).

9. Pump station according to claim 8, characterised in that the locking pin (24) extends horizontally and can be actuated mechanically, hydraulically, pneumatically or electrically.

10. Pump station according to claim 9, characterised in that the locking pin (24) is connected to a swivellable foot operated rail (25) rotatably secured to the frame (17).

11. Pump station according to one of the preceding claims, characterised in that the connections (4, 5) from the inflating station (3) extend downwards through the shaft (15) and emerge from the frame (17).

12. Pump station according to one of the preceding claims, characterised in that the rotation of the polygonal housing (7) about the vertical centre line (6) can be controlled mechanically, pneumatically, hydraulically or electrically.

13. Pump station according to claim 12, characterised in that chain wheels, toothed belts, piston and cylinder units with lever assemblies or motors, are arranged in the region of the frame (17) for rotation of the polygonal housing (7).

14. Pump station according to claim 2, characterised in that two support elements (13, 14), spaced apart from each other, are arranged on each side surface (8, 9, 10, 11) of the polygonal housing (7).

15. Pump station according to claim 14, characterised in that the support elements (13, 14) are respectively constructed as angle sections with an upper surface (26) and two side surfaces (27, 28) arranged at an angle thereto.

16. Pump station according to claim 14, characterised in that the support elements (13, 14) are constructed as boxes (13' 14') or as rollers (13'', 14'').

17. Pump station according to one of the preceding claims, characterised in that the upper end of the shaft (15) is connected to a carrier plate (29) for securing the inflating station (23).

18. Pump station according to one of the preceding claims, characterised in that a swivel arm (30) is provided in the region of the inflating station (3) for spring suspension of a part (5') of the pneumatic connection which can be connected to the tyre (2).

19. Pump station according to one of the preceding claims, characterised in that a cage (31) can be arranged at at least one side surface (8, 9, 10, 11) of the polygonal housing (7) to surround the tyre (2).

20. Pump station according to claim 19, characterised in that the cage (31) is connected to the stationary shaft (15) so that it can be raised, or so that it can be lowered or so that it can be swivelled.

21. Pump station according to one of the preceding claims, characterised in that the frame (17) is made of two transverse struts (50, 51) and a longitudinal strut (52) of right angled steel section.

22. Pump station according to claim 21, characterised in that the vertical shaft (15) is secured to the longitudinal strut (52) of the frame (17) by way of a securing plate (53).

23. Pump station according to one of the preceding claims, characterised in that the upper plane of the truncated pyramid like polygonal housing (7) is closed off by a recessed plate.

## Revendications

1. Station de pompage pour pneus, comprenant un bâti destiné à recevoir au moins un pneu et un dispositif de remplissage relié par des conduites à au moins une source pneumatique et à une unité électrique de commande, caractérisée en ce que :
- le bâti (1) est constitué par une enveloppe polygonale (7) rotative autour d'un axe principal vertical (6), et
- des pneus peuvent être reçus debout contre les parois latérales (8, 9, 10, 11) de l'enveloppe polygonale (7), au moins un pneu (2) en appui contre une paroi latérale (8) de l'enveloppe polygonale (7) pouvant être relié au dispositif de remplissage (3).

2. Station de pompage suivant la revendication 1, caractérisée en ce que l'enveloppe polygonale (7) est réalisée sous la forme d'un tronc de pyramide, au moins un élément d'appui (13, 14) pour un pneu étant prévu dans la région inférieure (12) du tronc de pyramide.

3. Station de pompage suivant la revendication 2, caractérisée en ce que le tronc de pyramide est traversé par un axe central (16) disposé suivant l'axe principal vertical (6) et entourant un arbre (15) disposé suivant l'axe principal vertical, et en ce que l'axe central (16) et l'arbre (15) font saillie par rapport à la région inférieure du tronc de pyramide, l'arbre (15) étant fixé à un châssis fixe (17).

4. Station de pompage suivant la revendication 3, caractérisée en ce qu'entre l'arbre (15) et l'axe central (16) sont disposés au moins deux paliers (18, 19).

5. Station de pompage suivant l'une des revendications précédentes, caractérisée en ce que l'axe central (16) est constitué par un tube rectangulaire et est relié à la paroi intérieure (22) de l'enveloppe polygonale (7) en forme de tronc de pyramide par des contrefiches (20, 21), dans la région supérieure et dans la région inférieure.

6. Station de pompage suivant l'une des revendications précédentes, caractérisée en ce qu'un arrêt est associé à chaque surface latérale (8, 9, 10, 11) du tronc de pyramide.

7. Station de pompage suivant l'une des revendications précédentes, caractérisée en ce que le tronc de pyramide comporte quatre surfaces latérales (8, 9, 10, 11).

8. Station de pompage suivant la revendication 6, caractérisée en ce qu'une plaque d'arrêt (23) est prévue sur l'axe central rotatif (16) dans la région du châssis (17), cette plaque coopérant avec un ergot d'arrêt (24) monté sur le châssis (17) et sollicité élastiquement.

9. Station de pompage suivant la revendication 8, caractérisée en ce que l'ergot d'arrêt (24) s'étend horizontalement et peut être actionné mécaniquement, hydrauliquement, pneumatiquement ou électriquement.

10. Station de pompage suivant la revendication 9, caractérisée en ce que l'ergot d'arrêt (24) est relié à un rail à pied (25) basculant, monté à pivotement sur le châssis (17).

11. Station de pompage suivant l'une des revendications précédentes, caractérisée en ce que les conduites (4, 5) s'étendent vers le bas à partir de la station de remplissage (3), à travers l'arbre (15), et sortent du châssis (17).

12. Station de pompage suivant l'une des revendications précédentes, caractérisée en ce que le mouvement de rotation de l'enveloppe polygonale (7) autour de l'axe principal vertical (6) peut être commandé mécaniquement, pneumatiquement, hydrauliquement ou électriquement.

13. Station de pompage suivant la revendication 12, caractérisée en ce que, pour faire tourner l'enveloppe polygonale (7), il est prévu, dans la région du châssis (17), des roues à chaîne, des courroies crantées, des unités à vérin comportant une tringlerie ou des moteurs.

14. Station de pompage suivant la revendication 2, caractérisée en ce que deux éléments d'appui (13, 14) espacés l'un de l'autre sont prévus sur chaque surface latérale (8, 9, 10, 11) de l'enveloppe polygonale (7).

15. Station de pompage suivant la revendications 14, caractérisée en ce que les éléments d'appui (13, 14) sont constitués chacun d'une cornière comportant une face supérieure (26) et deux faces latérales (27, 28) qui partent suivant un angle de la face supérieure.

16. Station de pompage suivant la revendications 14, caractérisée en ce que les éléments d'appui (13, 14) sont constitués par des boîtes (13', 14') ou des rouleaux (13'', 14'').

17. Station de pompage suivant l'une des revendications précédentes, caractérisée en ce que l'extrémité supérieure de l'arbre (15) est reliée à une plaque (29) de fixation du dispositif de remplissage (3).

18. Station de pompage suivant l'une des revendications précédentes, caractérisée en ce qu'un bras basculant (30) destiné au maintien élastique d'une partie de conduite pneumatique (5') pouvant être reliée au pneu (2) est prévue dans la région du dispositif de remplissage (3).

19. Station de pompage suivant l'une des revendications précédentes, caractérisée en ce qu'une cage (31) destinée à entourer le pneu (2) peut être disposée sur au moins une surface latérale (8, 9, 10, 11) de l'enveloppe polygonale (7).

20. Station de pompage suivant la revendication 19, caractérisée en ce que la cage (31) est reliée à l'arbre fixe (15) de manière à pouvoir être soulevée, abaissée ou basculée.

21. Station de pompage suivant l'une des revendications précédentes, caractérisée en ce que le châssis (17) est réalisée à partir de deux traverses (50, 51) et d'un longeron (52) en profilé d'acier à section rectangulaire.

22. Station de pompage suivant la revendication 21, caractérisée en ce que l'arbre vertical (15) est fixé aux longerons (52) du châssis (17) par l'intermédiaire d'une plaque de maintien (53).

23. Station de pompage suivant l'une des revendications précédentes, caractérisée en ce que le plan supérieur de l'enveloppe polygonale (7) en forme de tronc de pyramide est fermé par une plaque en retrait.
